# DEMANDE DE BREVET EUROPEEN

(11) **EP 1 142 974 A1**
(43) Date de publication de la demande: **10.10.2001**
(21) Numéro de dépôt: 01400469.1
(22) Date de dépôt: 22.02.2001
(51) Int. Cl.: C09J 7/04

(54) **Bande adhésive de protection et d'insonorisation**

(30) Priorité: 03.04.2000 FR 0004217
(71) Demandeur: PLASTO S.A., 21300 Chenôve (FR)
(72) Inventeur: Durand, Hervé, 21000 Dijon (FR)
(74) Mandataire: Hubert, Philippe

(57) **Abrégé**

Elle est du type comprenant un support tricoté (1) avec des fils multibrins (2) et comportant une face libre (3) et une face opposée (4) sur laquelle est montée une couche adhésive (5), et elle est caractérisée en ce que la face libre (3) est grattée de manière à libérer, en surface, au moins une partie des brins (2) desdits fils.

Application dans le domaine automobile.

## Description

La présente invention concerne une nouvelle bande adhésive utile pour former des revêtements de protection et d'insonorisation, notamment pour protéger et insonoriser les faisceaux de fils électriques ou de fibres optiques, ou pour insonoriser certains compartiments dans les véhicules automobiles.

### Art antérieur

On connaît déjà de nombreuses solutions techniques pour réaliser des protections et des insonorisations dans le domaine des automobiles. Par exemple, pour maintenir et protéger les faisceaux de fils, les documents EP 617691, EP 661774, EP 668336, EP 685546, EP 716136, EP 716137, EP 886358, WO 9950943 proposent divers supports plus ou moins complexes pour fabriquer des rubans adhésifs destinés à enrubanner les faisceaux de fils ou de câbles électriques ou de fibres optiques et former une gaine capable de maintenir les faisceaux et éviter les bruits générés par d'éventuels chocs ou frictions agressives entre le ou les faisceaux et la carrosserie. Parmi ces propositions, certaines mettent en oeuvre des supports non tissés dont les propriétés sont améliorées par des films ou des tissus contrecollés, par des fils cousus ou par des traitements thermiques ou mécaniques particuliers. L'avantage des supports non tissés réside dans leur faible coût. Cependant, ils doivent être assez épais pour présenter une résistance mécanique suffisante et présentent alors une flexibilité insuffisante pour se plier facilement autour des faisceaux électriques de faible diamètre. Un autre point délicat à résoudre concerne le déroulement des bandes adhésives présentées en rouleau. La protection de la surface adhésive est généralement faite au moyen d'une feuille antiadhérente qui doit être enlevée lors de la pose : cette feuille augmente les coûts et constitue un déchet encombrant. Un autre moyen de protection de la surface adhésive consiste à traiter la face non adhésive à l'aide d'une substance antiadhérente de façon à permettre le déroulement de la bande sans endommager la surface adhésive. Cette solution augmente également les coûts de fabrication et ne permet pas d'effectuer une protection des faisceaux de câbles électriques par enrubannage en spirale.

On connaît également, dans un domaine technique différent concernant les tissus agrippants de type « Velcro », des bandes textiles munies de bouclettes susceptibles de coopérer avec une autre bande textile munie de crochets pour former des dispositifs de fixation réversibles. Par exemple, US 3773580 décrit des bandes agrippantes adhésivées et les documents EP 693889 et FR 2767653 décrivent des perfectionnements de telles bandes munies de bouclettes, notamment dans le but de relever les bouclettes afin de mieux garantir leur aptitude pour s'enchevêtrer avec les crochets de la bande qui leur est opposée.

### Objet de l'invention

La présente invention propose une bande complexe adhésive pour protection et insonorisation, notamment pour le gainage des faisceaux de fils et le revêtement de certains compartiments dans les automobiles, ladite bande pouvant être en outre enroulée sur elle-même sans nécessité d'interposer une feuille ou un revêtement protecteur.

### Description

La bande adhésive complexe pour la protection et l'insonorisation est du type comprenant un support tricoté avec des fils multibrins et comportant une face libre et une face opposée sur laquelle est montée une couche adhésive, et elle est caractérisée en ce que la face libre est grattée de manière à libérer, en surface, au moins une partie des brins desdits fils.

Suivant un aspect particulier de l'invention, la masse adhésive est enduite sur la face opposée ou non grattée du support en tricot après que celle-ci ait subi un traitement corona.

Suivant un autre aspect de l'invention, le support tricoté subit un traitement d'apprêt, préalablement aux opérations d'enduction de la masse adhésive.

Suivant un autre aspect de l'invention, le complexe comprend en outre une couche de matériau alvéolaire à double peau entre le support tricoté et la couche de masse adhésive, la couche de matériau alvéolaire étant soudée par flammage ou contrecollée par un adhésif à la face non grattée du support tricoté.

Suivant un autre aspect de l'invention, le complexe comprend en outre une couche de fibres synthétiques non tissées soudées sur la face non grattée du support tricoté et un film interposé entre la couche non tissée et la couche adhésive.

Suivant encore un autre aspect de l'invention, la feuille adhésive peut être découpée et présentée soit sous forme d'une bande enroulée,soit sous forme d'une pile de feuilles sans qu'il ne soit nécessaire d'interposer une feuille de protection antiadhérente.

### Description détaillée

La bande adhésive selon l'invention comprend un support en tissu tricoté suivant un maillage indémaillable à partir de fils à brins multiples en fibres synthétiques telles que le polyester ou le polyamide. Les fils utilisés, qui peuvent être mis en oeuvre éventuellement en combinaison, présentent un titre de l'ordre de 10 à 80 dtex et préférentiellement de l'ordre de 20 à 44 dtex avec un nombre de brins compris entre 4 et 34 par fil. Le tricot est obtenu sur un métier chaîne, en tricotant suivant un maillage indémaillable de façon à pouvoir couper le tissu obtenu sans risque de destruction de sa structure, notamment s'il est nécessaire d'obtenir des rubans en découpant dans le sens de la longueur une bande de grande largeur issue du procédé d'enduction. Le métier à tricoter est configuré en jauge de 24, 28, ou 32, préférentiellement 28 de façon à former un tricot à mailles larges d'aspect assez aéré c'est-à-dire sur un métier chaîne dont la densité des aiguilles est de 24, 28 ou 32 aiguilles par pouce, de manière à obtenir un tricot avec 24, 28 ou 32 colonnes de mailles par pouce qui sont reliées par des fils de liaison plus fins, par exemple de 22 dtex. On obtient ainsi une structure de tissu léger, de l'ordre de 40 à 220 g/m², présentant une grande flexibilité et une extensibilité d'environ 10 à 50 %. Le support tricoté est ensuite soumis à une opération de grattage sur l'une de ses faces au moyen d'un dispositif mécanique à griffes, du type carde, de façon à extraire ou libérer une partie des brins ou filaments constituant les fils et former une surface présentant un grand nombre de brins partiellement libérés ou extraits des fils, à la manière d'une surface ébouriffée.

On obtient ainsi un aspect de surface doux, favorable à l'amortissement des bruits produits par des chocs légers et présentant une grande résistance à la lacération, la déchirure ou la perforation par un objet tranchant ou piquant.

La seconde face du support, non grattée, est constituée par les fils multibrins intacts et présente un aspect plus lisse et plus compact. Selon l'un des modes de réalisation de l'invention une couche de masse adhésive sensible à la pression est montée sur cette seconde face du support.

De préférence, la face du support non grattée est soumise à un traitement corona préalablement à l'opération de mise en place ou d'enduction de la masse adhésive, de façon à améliorer la liaison entre la surface du support et la masse adhésive.

La masse adhésive utilisée est de type acrylique en phase solvant. On choisit de préférence une niasse adhésive autoréticulante qui peut former un film présentant une forte cohésion et un pouvoir adhésif compris entre 1,5 et 5 N/cm. Le mode d'application de la couche adhésive, compte tenu de la structure peu compacte du support, est préférentiellement du type transfert, qui permet de former la couche adhésive d'épaisseur régulière sur une feuille antiadhérente, puis d'effectuer l'assemblage avec le support. La quantité de masse adhésive déposée est de l'ordre de 35 à 100 g/m², préférentiellement 40 à 70 g/m².

Selon un autre procédé d'adhésivation de la face non grattée du support, on utilise un film adhésif double face, constitué d'un film très fin en polyester ou polypropylène, d'épaisseur comprise entre 10 et 30 µm, la face du film en contact avec la face non grattée du tissu étant recouverte d'un adhésif sensible à la pression de type acrylique solvant ou élastomère, l'autre face étant recouverte d'une couche de masse adhésive sensible à la pression de type acrylique solvant. Ce procédé, par lequel on assemble la face non grattée du support sur l'une des faces du film adhésif double face, permet d'obtenir une bande à la fois insonorisante et imperméable.

Les bandes adhésives obtenues selon les modes de réalisation décrits ci-dessus trouvent essentiellement leur application pour former des gaines autour des faisceaux de fils dans la construction des automobiles. Le complexe réalisé selon la description précédente est découpé en rubans dont la largeur, dépendante de la dimension du faisceau de fils, est comprise entre 2 et 6 cm et les rubans sont enroulés sans protecteur pour être conditionnés sous forme de rouleaux. Les rouleaux sont ensuite utilisables sur des machines ou manuellement pour former la gaine autour des faisceaux de fils. Selon les techniques connues de l'homme du métier, la gaine peut être obtenue soit par enroulement en spirale autour du faisceau (enrubannage), soit par enroulement suivant l'axe longitudinal et assemblage de deux lisières du ruban par leurs faces adhésives (montage en drapeau).

Dans le cas d'une mise en oeuvre manuelle du ruban de gainage, on utilise un ruban obtenu par enduction directe de la couche de masse adhésive sur la face non grattée du support et on effectue, préalablement à l'enduction, un traitement d'apprêt du support tricoté. Ce traitement, qui augmente la fragilité des fibres tricotées, permet de rendre le ruban adhésif déchirable à la main, sans nécessité d'utiliser un instrument coupant. On obtient de cette façon un ruban adhésif de gainage insonorisant facile à utiliser, présentant une bonne résistance à l'abrasion et susceptible d'améliorer la sécurité dans les ateliers.

Suivant un autre mode de réalisation de l'invention, le complexe adhésif comprend une feuille de matériau alvéolaire intercalée entre la face non grattée du support et la couche de masse adhésive. La feuille de matériau alvéolaire est une mousse de polyoléfine, par exemple du polyéthylène ou, préférentiellement, du polypropylène non réticulé, ladite feuille présentant une peau sur chacune de ses faces.

On choisit des feuilles de mousse dont l'épaisseur est de l'ordre de 0,5 à 5 mm et présentant une densité d'environ 35 à 60 kg/m³. L'assemblage entre la face non grattée du support tricoté et l'une des faces de la feuille de matériau alvéolaire est réalisé soit au moyen d'une soudure par flammage et calandrage sans apport de matière, soit au moyen d'un adhésif tel que par exemple un adhésif thermofusible ou un adhésif sensible à la pression à fort pouvoir adhésif. L'assemblage ainsi obtenu est ensuite revêtu d'une couche de masse adhésive acrylique sur la seconde face à structure de peau de la feuille de mousse. Le complexe adhésif présente un toucher doux et résistant sur sa face non adhésive et d'excellentes caractéristiques d'amortissement des chocs et des bruits. En raison de l'utilisation d'une mousse de polyoléfine, le complexe peut être thermoformé sur un moule à dépression et on peut ainsi obtenir des panneaux à 3 dimensions fixables au moyen de l'adhésif sur les parois métalliques ou plastiques de compartiments nécessitant une protection mécanique ou une insonorisation. Parmi les applications possibles envisagées pour un panneau de ce type, on peut citer le garnissage du capot moteur ou des différentes parois du coffre à bagages.

Selon un autre mode de réalisation de l'invention, le complexe adhésif comprend une couche de feutre non tissé en polyester assemblée à la face non grattée du support tricoté. On utilise des feutrines non tissées d'épaisseur comprise entre 0,5 et 2,5 mm, présentant une densité de l'ordre de 50 à 250 g/m². L'assemblage de la couche non tissée avec la face non grattée du support tricoté est réalisé par un procédé thermique, par exemple un traitement des surfaces à l'air chaud ou à la flamme, afin d'obtenir une liaison très solide et rendre les deux couches inséparables. La couche de masse adhésive est ensuite ajoutée sur la face libre du non tissé soit par transfert, soit par le moyen d'un film en polyester enduit d'adhésif sensible à la pression sur ses deux faces que l'on vient fixer sur cette face libre du non tissé. Les masses adhésives utilisées sont, comme précédemment à base de polymères acryliques formulés en phase solvant et autoréticulables pour la face externe du film et à base de polymères acryliques formulés en phase solvant ou de masse adhésive à base élastomère pour la face du film en contact avec la face de la feutrine non tissée. Les complexes adhésifs ainsi obtenus trouvent leur application pour le gainage des faisceaux de fils lorsque l'on utilise des feutrines non tissées de faible épaisseur, ou pour la protection et l'insonorisation des parois lorsque l'épaisseur de la feutrine est plus importante. De façon pratique, les complexes adhésifs décrits ci-dessus sont découpés soit en rubans, soit sous forme de feuilles de dimensions déterminées adaptées à l'utilisation ultérieure. Compte tenu de l'aspect de surface de la face non adhésivée du complexe, il n'est pas nécessaire d'interposer une feuille antiadhérente entre chaque spire du rouleau ou entre chaque feuille d'une pile. Ainsi, on peut obtenir des rouleaux de bande adhésive enroulée sans protecteur destinés au gainage des faisceaux de câblés électriques, lesdits rouleaux étant bien plus pratiques à utiliser que des rouleaux comportant un papier antiadhérent. De même, le complexe adhésif selon l'invention peut être découpé sous forme de panneaux qui sont ensuite thermoformés puis rassemblés sous forme d'une pile sans protecteurs intercallés pour être ensuite livrés à l'atelier de montage. D'autres avantages et caractéristiques ressortiront à la lecture de la description de plusieurs modes de réalisation selon l'invention, ainsi que des dessins annexés sur lesquels :
- la figure 1 est une vue schématique en coupe du complexe selon un premier mode de réalisation de l'invention ;
- la figure 2 est une vue schématique en coupe du complexe selon un deuxième mode de réalisation de l'invention ;
- la figure 3 est une vue schématique en coupe du complexe selon un troisième mode de réalisation de l'invention ;
- la figure 4 est une vue schématique en coupe selon un quatrième mode de réalisation de l'invention.

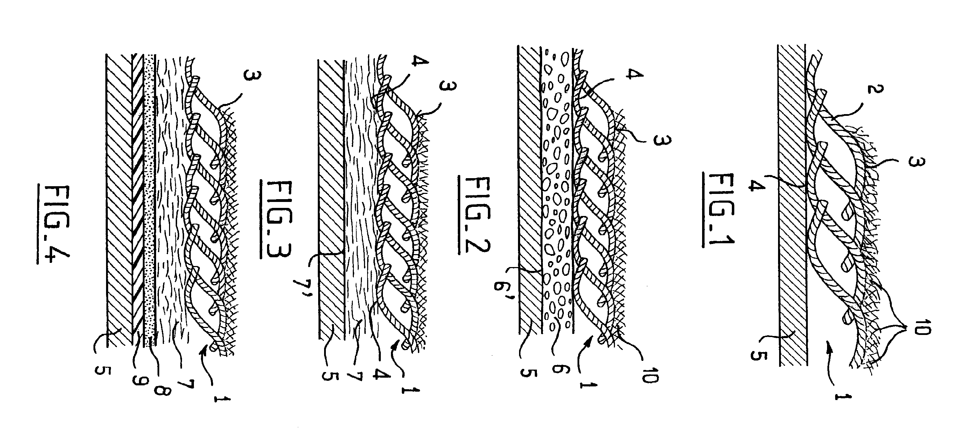

La figure 1 représente un tissu tricoté 1 constitué de fils multibrins 2 entrelacés suivant un maillage indémaillable. La face supérieure ou face libre 3 du tricot a été grattée de façon à extraire des brins 10 des fils multibrins 2 pour former une couche de brins tirés et cassés. La face opposée inférieure 4, non modifiée, est recouverte d'une couche de masse adhésive sensible à la pression 5.

La figure 2 représente un complexe constitué d'un tissu tricoté 1 et gratté sur sa face supérieure 3, soudé par sa face inférieure 4 à une feuille de mousse de polypropylène (matériau alvéolaire) 6 à double peau, ladite feuille de mousse étant elle-même recouverte sur sa seconde face 6' par la couche d'adhésif sensible à la pression 5.

La figure 3 représente un autre complexe constitué d'un tissu tricoté 1, gratté sur sa face supérieure 3, soudé par sa face inférieure 4 sur une feutrine non tissée 7, ladite feutrine étant recouverte sur sa seconde face 7' par une couche d'adhésif 5 déposée par transfert.

La figure 4 représente un complexe constitué d'un tissu tricoté 1 gratté sur sa face supérieure 3 et complexé par une feutrine non tissée 7 soudée par flammage, une couche de masse adhésive 8, un film de polyester 9 et une couche de masse adhésive sensible à la pression 5.

Les exemples de réalisation qui suivent permettent de mieux apprécier les avantages de l'invention, mais ne doivent pas être considérés comme en limitant la portée.

### Exemple 1

On utilise un support tricoté en polyamide de grammage 92 g/m², à maille indémaillable, obtenu à partir de fils multibrins titrant 44 dtex sur une machine réglée en jauge 28 c'est-à-dire sur une machine dont la densité des aiguilles est de 28 par pouce, de sorte qu'on obtient 28 colonnes de mailles par pouce et dont la grosseur du fil est de 44 dtex. Un fil de 44 dtex est un fil qui pèse 44 grammes pour une longueur de 10 000 m.

Ce tissu tricoté peut être obtenu sous la référence 5089 auprès de la société CIFRAN TEXMAILLE. Le support tricoté subit un grattage mécanique sur une première face et un traitement corona sur la seconde face, puis on transfère sur cette seconde face une couche de masse adhésive sensible à la pression, selon un grammage de 40 g/m².

On utilise une masse acrylique formulée en phase solvant et disponible par exemple sous la référence XPE 376 auprès de la société AVchemie. Après complexage de la couche adhésive et calandrage, la feuille antiadhérente de transfert est retirée. Le complexe adhésif obtenu est ensuite découpé en rubans, enroulables sans protecteur, qui trouvent leur application dans le domaine industriel du gainage des faisceaux de fils pour les automobiles.

### Exemple 2

On utilise un support tricoté en polyamide, de grammage 70 g/m², obtenu à partir de fils multibrins titrant 22 dtex et 44dtex, tricotés sur la même machine que précédemment. Ce support subit un grattage mécanique sur l'une de ses faces puis un traitement d'apprêt au moyen d'une solution contenant notamment un raidisseur à base de mélamineméthylol du type commercialisé par la société ROTTA GmbH sous la marque ROTTA FIX. On complexe ensuite, de façon analogue au procédé décrit selon l'exemple 1, une couche de masse adhésive de type acrylique sensible à la pression. La bande adhésive obtenue, découpée en rubans enroulables sans protecteur, trouve son application dans le domaine du gainage manuel des faisceaux de fils électriques pour les automobiles. Les rubans obtenus peuvent être sectionnés par déchirement manuel, sans utilisation d'instruments de coupe.

### Exemple 3

On utilise un support tricoté en polyamide noir, de référence analogue au tissu utilisé pour l'exemple 1. Ce support est gratté mécaniquement sur l'une de ses faces puis collé, au moyen d'une couche de masse adhésive acrylique, sur une feuille de mousse de polypropylène non réticulé à cellules fermées (matériau alvéolaire) et à double peau (chacune des deux faces se présente sous forme d'une peau).

On choisit une feuille de mousse de polypropylène noire ignifugée, d'épaisseur environ 1,2 mm et de densité environ 45 kg/m³, disponible par exemple auprès de la société PSG SENTINEL. La face libre de la couche de mousse est ensuite traitée selon le procédé Corona puis enduite d'une couche de masse adhésive de type acrylique autoréticulante, à raison d'environ 50 g/m².

La feuille complexe selon l'invention ainsi obtenue peut être découpée en bande pour être utilisée dans le domaine du gainage des faisceaux de fils de fort diamètre ou être utilisée sous forme de feuilles pour garnir et protéger les parois de certains compartiments dans les automobiles comme par exemple le capot du compartiment moteur.

Dans ce cas, il peut être avantageux de thermoformer la feuille complexe adhésivée sur un moule à dépression sans contre-empreinte de façon à ce que la feuille s'adapte avec précision aux formes de la paroi.

### Exemple 4

Le support tricoté en polyester noir, de densité 220 g/m², commercialisé par la société CIFRAN TEXMAILLE est gratté mécaniquement sur l'une de ses faces puis assemblé sur sa seconde face, par flammage suivi d'un calandrage, à une couche de feutrine non tissée en polyester, de densité 150 g/m² (ce non tissé peut être obtenu par exemple auprès de la société NTI TEXIDEL). La face libre de la couche de feutrine non tissée est ensuite traitée selon le procédé corona puis enduite, par transfert, d'une couche de masse adhésive acrylique d'un grammage de l'ordre de 60 g/m². En variante, la couche adhésive peut être amenée sous forme d'un film polyester de faible épaisseur (13 µm), adhésivé sur ses deux faces par une couche d'adhésif acrylique sensible à la pression déposé à raison d'environ 40 g/m² sur chacune des deux faces. Cette dernière possibilité présente l'avantage de rendre le complexe plus facile à dérouler et pratiquement imperméable, ce qui permet d'obtenir des feuilles thermoformables sur moule à dépression sans contre-empreinte (la face grattée du support tricoté étant placée contre le moule).

Ce complexe selon l'invention trouve son application pour le gainage des faisceaux de fils importants ou pour la protection des parties de carrosserie devant être insonorisées ou protégées des chocs légers.

Selon les utilisations envisagées, notamment dans l'industrie des automobiles, les différents constituants du complexe, et principalement les masses adhésives utilisées, peuvent contenir des additifs destinés à empêcher la propagation des flammes afin que le complexe fabriqué présente des caractéristiques ignifuges.

## Revendications

1. Complexe adhésif en bande ou en feuille, comprenant un support tricoté (1) avec des fils multibrins (2) et comportant une face libre (3) et une face opposée (4) sur laquelle est montée une couche adhésive (5), et **caractérisé en ce que** la face libre (3) est grattée de manière à libérer, en surface, au moins une partie des brins (2) desdits fils.

2. Complexe adhésif selon la revendication 1, **caractérisé en ce que** les fils multibrins (2) sont en polyamide ou polyester et **en ce que** la couche adhésive (5) est constituée par une masse adhésive du type acrylique et sensible à la pression.

3. Complexe adhésif selon la revendication 1, **caractérisé en ce que** le support est tricoté en mailles indémaillables et présente une densité de surface de l'ordre de 40 à 220 g/m².

4. Complexe adhésif selon l'une des revendications 1 ou 3, **caractérisé en ce qu'**un traitement corona est effectué sur ladite face opposée (4) du support tricoté (1).

5. Complexe adhésif selon l'une des revendications 1 à 4, **caractérisé en ce que** le support tricoté (1) subit un traitement d'apprêt, préalablement à l'opération d'enduction de la couche adhésive.

6. Complexe adhésif selon l'une des revendications 1 à 3, **caractérisé en ce que** le complexe comprend en outre une couche de matériau alvéolaire (6) synthétique à double peau, interposé entre le support tricoté (1) et la couche adhésive (5).

7. Complexe adhésif selon l'une des revendications 1 à 3, **caractérisé en ce que** le complexe comprend en outre une couche de feutrine non tissée (7) en fibres synthétiques interposée entre le support tricoté (1) et la couche adhésive (5), la liaison entre la face opposée (4) du support tricoté (1) et la feutrine (7) étant réalisée par thermosoudure à l'air chaud ou à la flamme.

8. Complexe adhésif selon l'une des revendications 1 à 7, **caractérisé en ce que** la couche de masse adhésive est amenée sous forme d'une fine feuille de polyester ou de polypropylène adhésivée sur ses deux faces.

9. Complexe adhésif selon la revendication 7, **caractérisé en ce que** la couche de masse adhésive est déposée par transfert après traitement corona de la surface libre de la feutrine.

10. Complexe adhésif selon l'une des revendications 6 à 8, **caractérisé en ce qu'**il est thermoformé.

11. Complexe adhésif selon l'une des revendications 1 à 9 **caractérisé en ce qu'**il est présenté sous forme d'un ruban enroulé sans protecteur.

12. Utilisation d'un complexe adhésif selon l'une des revendications 1 à 9 sous forme d'un ruban pour le gainage des faisceaux de fils dans les automobiles.

13. Complexe adhésif selon l'une des revendications 6 à 10. **caractérisé en ce qu'**il est présenté sous forme d'une pile de panneaux empilés sans protecteurs intercallés.

14. Utilisation d'un complexe adhésif selon l'une des revendications 6 à 10 pour la protection et l'insonorisation de compartiments dans les automobiles.
